# EUROPEAN PATENT SPECIFICATION

(11) **EP 4 210 297 B1**
(45) Date of publication and mention of the grant of the patent: **06.08.2025**
(21) Application number: 21863329.5
(22) Date of filing: 25.06.2021
(51) Int. Cl.: H04L 67/51, H04L 67/141, H04L 67/63, H04L 65/40, H04L 61/4541

(54) **EDGE APPLICATION DISCOVERY METHOD AND APPARATUS**
VERFAHREN UND VORRICHTUNG ZUR ERKENNUNG VON EDGE-ANWENDUNGEN
PROCÉDÉ ET APPAREIL DE DÉCOUVERTE D'APPLICATION DE PÉRIPHÉRIE

(30) Priority: 02.09.2020 CN 202010911318
(43) Date of publication of application: 12.07.2023
(73) Proprietor: ZTE Corporation, Shenzhen, Guangdong 518057 (CN)
(72) Inventor: SONG, Xueyan, Shenzhen, Guangdong 518057 (CN); MIAO, Chuanyang, Shenzhen, Guangdong 518057 (CN)
(74) Representative: Novagraaf Technologies
(86) International application number: PCT/CN2021/102501
(87) International publication number: WO 2022/048261

(56) References cited:
- EP-A1- 4 210 360
- CN-A- 108 989 372
- CN-A- 109 640 319
- CN-A- 109 640 319
- CN-A- 110 730 482
- CN-A- 112 491 944
- US-A1- 2019 045 409
- US-A1- 2019 380 028
- US-A1- 2020 106 840

## Description

### Technical Field

Embodiments of the present application relate to the field of communications, and in particular, to an edge application discovery method and apparatus, and an edge application service support method and apparatus.

### Background

The mobile edge computing (MEC) technology shortens network latency caused by network transmission and multi-level service forwarding by means of sinking a service to the edge of a network, so as to meet the strict requirements of the 5th generation mobile networks (5G) service on bandwidth and latency. At present, in the related art, the MEC technology has no relatively complete technical specification in a transport network, and especially in a fixed access network, such that for a 5G wireless wireline convergence (5G WWC) scenario, the implementation of the MEC technology cannot be effectively supported in the related art.

The American patent applications published with patent numbers US 2020/106840 A1 and US 2019/045409 A1; and the European patent application published with patent number EP 4 210 360 A1 provide respective technical solutions; however, the above mentioned problem still remains unsolved.

### Summary

An object of the present application is an edge application discovery method, which is applied to an EAC. The method includes: sending an application discovery request message to a core network, so that the core network matches a target edge application server (EAS) according to application content information carried in the application discovery request message, wherein the application content information at least includes network parameter information, and the network parameter information is used for instructing the EAC to match the information of the corresponding EAS; and receiving target EAS information replied by the core network, wherein the target EAS information is used for indicating the target EAS;
wherein sending the application discovery request message to the core network comprises:sending the application discovery request message to a gateway being a 5G-RG by means of a preset first interface, and triggering the application discovery request service to the core network by means of the 5G-RG, so as to send the application discovery request message to the core network; orsending the application discovery request message to a gateway being a FN-RG by means of a preset second interface, and triggering the application request service to a proxy by means of the FN-RG, so as to send the application discovery request message to the core network by means of the proxy.

According to another object of the present application, further provided is an edge application discovery apparatus, which is applied to an EAC. The apparatus includes: a first sending module, configured to send an application discovery request message to a core network, so that the core network matches a target edge application server (EAS) according to application content information carried in the application discovery request message, wherein the application content information at least includes network parameter information, and the network parameter information is used for instructing the EAC to match the information of the corresponding EAS; and a first receiving module, configured to receive target EAS information replied by the core network, wherein the target EAS information is used for indicating the target EAS; wherein the first sending module is further configured to:send the application discovery request message to a gateway being a 5G-RG by means of a preset first interface, and trigger the application discovery request service to the core network by means of the 5G-RG, so as to send the application discovery request message to the core network; orsend the application discovery request message to a gateway being a FN-RG by means of a preset second interface, and trigger the application request service to a proxy by means of the FN-RG, so as to send the application discovery request message to the core network by means of the proxy.

Preferred embodiments are covered by the appended dependent claims.

### Brief Description of the Drawings

Fig. 1 is a first flowchart of an edge application discovery method provided according to an embodiment of the present application;
Fig. 2 is a first schematic flowchart of an application service request mechanism between an EAC and a gateway provided according to an exemplary embodiment of the present application;
Fig. 3 is a schematic flowchart of an EAS discovery mechanism provided according to an exemplary embodiment of the present application;
Fig. 4 is a second schematic flowchart of an application service request mechanism between an EAC and a gateway provided according to an exemplary embodiment of the present application;
Fig. 5 is a schematic flowchart of an application service release mechanism between an EAC and a gateway provided according to an exemplary embodiment of the present application;
Fig. 6 is a schematic flowchart of PDU resource release provided according to an exemplary embodiment of the present application;
Fig. 7 is a schematic flowchart of an application service update mechanism between an EAC and a gateway provided according to an exemplary embodiment of the present application;
Fig. 8 is a first flowchart of an edge application service support method provided according to an embodiment of the present application;
Fig. 9 is a second flowchart of an edge application service support method provided according to an embodiment of the present application;
Fig. 10 is a third flowchart of an edge application service support method provided according to an embodiment of the present application;
Fig. 11 is a fourth flowchart of an edge application service support method provided according to an embodiment of the present application;
Fig. 12 is a second flowchart of an edge application discovery method provided according to an embodiment of the present application;
Fig. 13 is a fifth flowchart of an edge application service support method provided according to an embodiment of the present application;
Fig. 14 is a sixth flowchart of an edge application service support method provided according to an embodiment of the present application;
Fig. 15 is a seventh flowchart of an edge application service support method provided according to an embodiment of the present application;
Fig. 16 is an eighth flowchart of an edge application service support method provided according to an embodiment of the present application;
Fig. 17 is a first structural block diagram of an edge application discovery apparatus provided according to an embodiment of the present application.

### Detailed Description of the Embodiments

The embodiments of the present application will be described in detail hereinafter with reference to the drawings and in combination with embodiments.

It should be noted that, the terms "first", "second" and the like in the specification and claims of the present application and the drawings are used for distinguishing similar objects, and are not necessarily used for describing a specific order or sequence.

In order to further illustrate an edge application discovery method and apparatus, and an edge application service support method and apparatus in the embodiments of the present application, application scenarios of the edge application discovery method and apparatus, and the edge application service support method and apparatus in the embodiments of the present application are described below:
With the rapid development of the mobile Internet and the Internet of Things, the 5G service presents the characteristic of requirement diversity. The 3rd generation partnership project (3GPP) defines relatively typical scenarios in 5G applications: enhanced mobile broadband, ultra-reliable and low latency communication (URLLC), massive machine type of communication (mMTC), vehicle to everything (V2X), and the like. On one hand, the above eMBB scenario provides large-traffic mobile broadband services, such as high-speed downloading, high-definition videos, and virtual reality (VR)/augmented reality (AR), the peak rates of the above services usually exceed 10 Gbps, and the requirement of the bandwidth is as high as dozens of Gbps, thereby causing huge pressures to wireless mid-haul and back-haul mobile networks. Therefore, the service requirements require that the services are sunk to the edges of the networks as much as possible, so as to realize the local shunting of the services. On the other hand, the URLLC scenario and the V2X scenario may provide ultra-high reliable and ultra-low latency communications, such as autonomous driving, industrial control and remote medical treatment, which require end-to-end high reliability of 99.999% and end-to-end ultra-low latency less than 1ms. Therefore, the service requirements also require that the services are sunk to the edges of the networks, so as to reduce network latency caused by network transmission and multi-level service forwarding.

With regard to the service requirements of the above 5G related service scenarios, the MEC technology is born at the right moment. The MEC, as a key technology of 5G evolution, provides a cloud computing capability and an IT service environment for an edge application on a mobile network edge, which is closer to a client, and has the characteristics of ultra-low latency, ultralarge bandwidth, localization, high real-time performance analysis processing, etc. For the MEC, the European Telecommunications Standards Institute (ETSI) has standard specifications for the architecture of the MEC, and the 3GPP also has certain technical specifications for the MEC. However, no related standard research is made in a fixed network on how to apply an MEC system to the fixed network, especially how to apply to a 5G WWC fixed network-mobile network fusion scenario.

In order to implement the service support for the MEC in a 5G WWC scenario, the embodiments of the present application provide an edge application discovery method and apparatus, and an edge application service support method and apparatus. The edge application discovery method and apparatus, and the edge application service support method and apparatus in the embodiments of the present application will be described below:
In one aspect, the embodiments of the present application provide an edge application discovery method, which is applied to an edge application client (EAC).

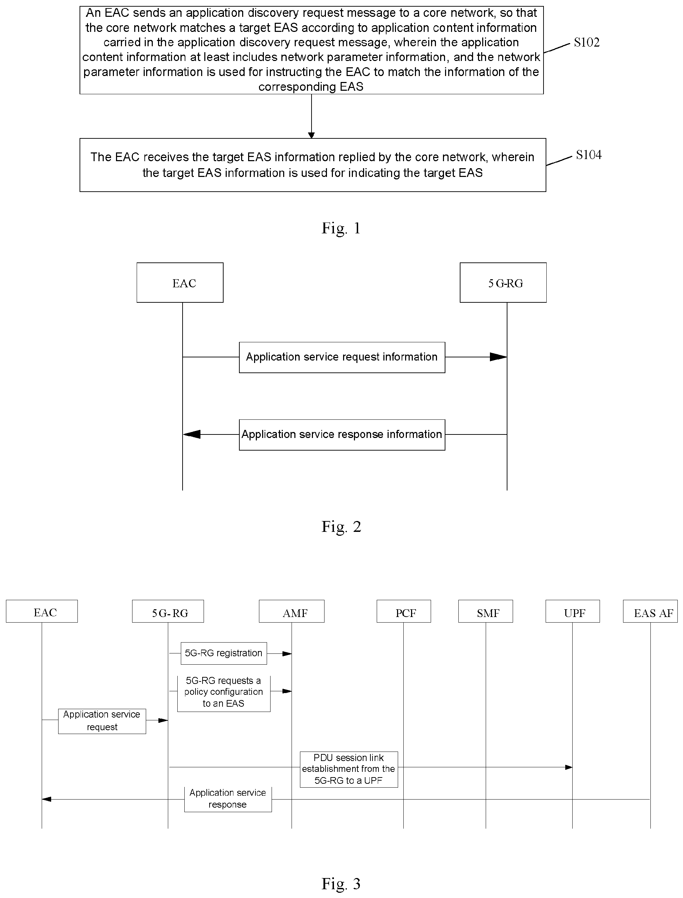

Fig. 1 is a first flowchart of an edge application discovery method provided according to an embodiment of the present application, and as shown in Fig. 1, the edge application discovery method in the embodiment of the present application includes:
S102, the EAC sends an application discovery request message to a core network, so that the core network matches a target edge application server (EAS) according to application content information carried in the application discovery request message, wherein the application content information at least includes network parameter information, and the network parameter information is used for instructing the EAC to match the information of the corresponding EAS.

In the embodiment of the present application, in a 5G WWC scenario, the core network may be a 5G core network (5GC). In the step S102, the network parameter information may include at least one of the following: a domain name (DN) of the target EAS, an edge data network (EDN) address of the target EAS, and a slice service request of the EAC, that is, network slice selection assistance information (NSSAI) of the EAC.

In an embodiment, in the step S102, sending the application discovery request message to the core network includes: sending the application discovery request message to a gateway, and triggering an application discovery request service by means of the gateway, so as to send the application discovery request message to the core network.

In the embodiment of the present application, the gateway may be a 5G-residential gateway (5G-RG), and may also be a fixed network-residential gateway (FN-RG). The EAC may send the application discovery request message to the core network by means of the corresponding gateway.

It should be noted that, the processes of sending the application discovery request message to the core network by gateways corresponding to the 5G-RG and the FN-RG are different from each other. The processes of sending the application discovery request message to the core network by means of applications corresponding to the 5G-RG and the FN-RG will be described below in a plurality of embodiments:
In an embodiment, when the gateway is the 5G-RG, the step: sending the application discovery request message to the gateway, and triggering the application discovery request service by means of the gateway, so as to send the application discovery request message to the core network, includes: sending the application discovery request message to the 5G-RG by means of a preset first interface, and triggering the application discovery request service to the core network by means of the 5G-RG, so as to send the application discovery request message to the core network.

In the above embodiment, the 5G-RG needs to be registered to the core network in advance, that is, before the application discovery request message is sent to the 5G-RG by means of the preset first interface, the 5G-RG is registered to the core network.

On the premise of sending the application discovery request message by means of the 5G-RG, correspondingly, the step of receiving the target EAS information replied by the core network includes: receiving the target EAS information replied by the 5G-RG, wherein the target EAS information is sent by the core network to the 5G-RG.

In an embodiment, when the gateway is the FN-RG, the step: sending the application discovery request message to the gateway, and triggering the application discovery request service by means of the gateway, so as to send the application discovery request message to the core network, includes: sending the application discovery request message to the FN-RG by means of a preset second interface, and triggering the application request service to a proxy by means of the FN-RG, so as to send the application discovery request message to the core network by means of the proxy.

In the above embodiment, the second interface is used for indicating an interface different from the first interface. Since the FN-RG cannot directly support the implementation of the 5G service, the FN-RG needs to use an access gateway function (AGF) or a fixed mobile interworking function (FMIF) of a 5G WWC network as the proxy of the FN-RG, so as to support the 5G service.

In the above embodiment, the FN-RG also needs to be registered to the core network in advance, that is, before the application request service is triggered to the proxy by means of the FN-RG, the FN-RG is registered to the core network by means of the proxy.

On the premise of sending the application discovery request message by means of the FN-RG, correspondingly, the step of receiving the target EAS information replied by the core network includes: receiving the target EAS information replied by the FN-RG, wherein the target EAS information is sent by the core network to the FN-RG by means of the proxy.

S104, the EAC receives the target EAS information replied by the core network, wherein the target EAS information is used for indicating the target EAS.

In the embodiment of the present application, in the step S102, the target EAS information includes at least one of the following: an Internet Protocol (IP) address of the target EAS, domain name information of the target EAS, and identification information of the target EAS.

In an embodiment, in the step S104, the core network matching the target EAS according to the application content information carried in the application discovery request message includes: acquiring, by the core network, the network parameter information according to the application discovery request message, and initiating a matching request by means of a policy control function (PCF), so as to match the target EAS by means of a preset user equipment route selection policy (URSP).

By means of the embodiment of the present application, the application discovery request message may be sent to the core network by means of the EAC, so that the core network matches the target edge application server (EAS) according to the application content information carried in the application discovery request message, wherein the application content information at least includes the network parameter information, and the network parameter information is used for instructing the EAC to match the information of the corresponding EAS; and further, the target EAS information replied by the core network is received by means of the EAC, wherein the target EAS information is used for indicating the target EAS. Therefore, by means of the interaction between the EAC and the core network, for example, the 5GC, the discovery of the corresponding EAC by the core network can be realized, thereby realizing the discovery of an edge application in the 5G WWC scenario. Therefore, By means of the embodiment of the present application, the problem that the implementation of the MEC technology cannot be effectively supported in the related art can be solved, thereby achieving the effect of implementing edge computing processing in a 5G transmission network, and thus implementing the service support for the MEC in the 5G WWC scenario.

The edge application discovery method in the embodiment of the present application may be applied to various 5G WWC scenarios, for example, in a scenario corresponding to smart home, a home user may serve as the EAC to implement the discovery of the home user by the 5GC, and the support of a corresponding MEC service.

To further illustrate the discovery process of the edge application in the 5G WWC scenario in the embodiment of the present application, the foregoing edge application discovery method is further described below by way of exemplary embodiments:

### Exemplary Embodiment 1

In the present exemplary embodiment, the gateway is the 5G-RG. In the present exemplary embodiment, the workflow of the edge application discovery method is shown as follows:
S201, the EAC sends an application discovery request, and carries application content to the 5G-RG by means of a B1 interface.
S202, after receiving the application discovery request sent by the EAC, the 5G-RG triggers an App service request to the 5GC, wherein the premise of this step is that the 5G-RG has been registered to the 5GC.
S203, after receiving the application discovery request sent by the EAC, the 5GC acquires a DN corresponding to a target EAS EAC required by the 5GC, an EDN address, NSSAI information (which is the NSSAI requested by the EAC herein) corresponding to the EAC, and some other related network parameter information for matching the EAS.
S204, the 5GC parses the acquired network parameter information that includes the DN corresponding to the EAC, the EDN address and the S-NSSAI, and initiates a request by means of a PCF, so that the PCF acquires the corresponding EAS information by means of a URSP, and replies, to the 5G-RG, an IP address of the EAS, domain name information of the target EAS, identification information of the target EAS, S-NSSAI information (which is NSSAI information allowed by the target EAS herein) of the target EAS, edge location information (i.e., UPF information) related to the access of the EAS, and the PDU session ID information used by user plane forwarding, etc.
S205, the 5G-RG replies the acquired related information of the EAS to the EAC.

It should be noted that, in the present exemplary embodiment, the application types corresponding to the EAC are diverse, and correspondingly, the application content required to be carried by different application type WiFi protocols is different from each other, therefore the B1 interface in the present exemplary embodiment needs to support different types of application content, thereby implementing edge application services in corresponding scenarios. In the embodiment of the present application, the application content that needs to be supported by the B1 interface is not limited, and the protocol of the B1 interface may be extended according to actual requirements, so as to increase the support of related scenarios, such as the edge application service of a smart home application.

### Exemplary Embodiment 2

In the present exemplary embodiment, the gateway is the FN-RG. In the present exemplary embodiment, the workflow of the edge application discovery method is shown as follows:
S301, the EAC sends an application discovery request, and carries application content to the FN-RG by means of a B2 interface.

It should be noted that, the technical requirements of the B2 interface in the above step are different from the technical requirements of the B1 interface in the exemplary embodiment 1. Since the FN-RG cannot support the requirements of the 5G service, the FN-RG can only use an AGF or FMIF in a 5G WWC network as a proxy of the FN-RG for the requirements of the 5G service, so as to support the 5G service.

S302, after receiving the application discovery request sent by the EAC, the FN-RG sends the request to the AGF or the FMIF, wherein the premise of this step is that the FN-RG has been registered to the 5GC by means of the proxy AGF or FMIF.

S303, after receiving the application discovery request sent by the EAC, the 5GC acquires a DN corresponding to the EAC required by the 5GC, an EDN address, S-NSSAI, and some other related network parameter information for matching the EAS.

S304, the 5GC parses the acquired network parameter information that includes the DN corresponding to the target EAS, the EDN address and the S-NSSAI corresponding to the EAC, and initiates a request by means of a PCF, so that the PCF acquires the corresponding EAS information by means of a URSP, and replies, to the proxy AGF or FMIF of the FN-RG, an IP address of the EAS, domain name information of the target EAS, identification information of the target EAS, S-NSSAI information of the target EAS, edge location information related to the access of the EAS, and PDU session ID information used by user plane forwarding, etc.

S305, the proxy AGF or FMIF of the FN-RG replies the acquired related information of the EAS to the FN-RG, so that the FN-RG notifies the EAC.

In the present exemplary embodiment, the application types corresponding to the EAC are diverse, the application content required to be carried by WiFi protocols corresponding to different application types is different from each other, and a smart home edge application service may be implemented by means of the support of different types of application content by the B2 interface.

Similarly, in the present exemplary embodiment, the application types corresponding to the EAC are diverse, and correspondingly, the application content required to be carried by different application type WiFi protocols is different from each other, therefore the B2 interface in the present exemplary embodiment needs to support different types of application content, thereby implementing edge application services in corresponding scenarios. In the embodiment of the present application, the application content that needs to be supported by the B2 interface is not limited, and the protocol of the B2 interface may be extended according to actual requirements, so as to increase the support of related scenarios, such as the edge application service of a smart home application.

In the embodiment of the present application, on the basis of the discovery of the edge application in the 5G WWC scenario, the function of the gateway may also be extended, so as to enable the EAC to support different types of edge application service content by means of the function-extended gateway. The process of EAC for supporting different types of edge application service content by means of the function-extended gateway is described below:
In an embodiment, the edge application discovery method in the embodiment of the present application further includes:
sending, by the EAC, an application service request message to the gateway, and triggering an EAS access service mechanism by means of the gateway, so as to forward the application service request message to an EAS application function (AF) of the core network, and then requesting an EAS service from the core network, wherein the application service request message is used for indicating the EAS service, which is requested by the EAC from the core network; and receiving an application service request response message replied by the gateway, wherein the application service request response message is generated by the gateway according to an application service registration completion message sent by the core network, and the application service registration completion message is used for instructing the core network to complete the registration of the EAS service for the EAC.

In the above embodiment, the gateway may generally be a 5G-RG, which is capable of supporting the 5G service.

It should be noted that, the EAS AF is used for indicating an AF, which is applied to EAS service support.

In an embodiment, the application service request message carries application authentication information, wherein the application authentication information is used for instructing the EAS to perform access authentication on the EAC, and the application authentication information includes at least one of the following: domain name system (DNS) information of the application service, and identity document (ID) information of the EAC.

In an embodiment, the step of sending the application service request message to the gateway includes: sending the application service request message to the gateway by means of a third interface, wherein the third interface supports to carry content corresponding to a plurality of application services.

In an embodiment, before the step of sending the application service request message to the gateway, the method further includes:
sending, by the gateway, a registration authentication request to the core network, wherein the authentication registration request is used for instructing the gateway to perform registration authentication on the core network;
initiating, by the gateway, a request to a PCF by means of an access and mobility management function (Access and Mobility Management Function, AMF), so that the PCF acquires policy information from the gateway to the EAS by means of searching for a preset URSP policy, wherein the policy information includes at least one of the following: an IP address of the EAS, user plane function (UPF) information corresponding to the EAS; and
establishing, by the gateway and according to the policy information, a packet data unit (PDU) session between the gateway and an UPF indicated by the UPF information, wherein the PDU session is used for carrying the traffic from the EAC to the EAS, and/or, a redirection operation of the traffic.

In an embodiment, the registration authentication request is generated by subscription permanent identifier (SUPI) encapsulation or subscription concealed identifier (SUCI) encapsulation based on an LINE-ID format.

In an embodiment, the URSP policy is configured locally, or the URSP policy is configured during the process of the gateway sending the registration authentication request to the core network.

In an embodiment, the policy information is further used by the AMF to establish a policy-related link between the edge application service of the gateway and the PCF; and after the gateway establishes, according to the policy information, the PDU session between the gateway and the UPF indicated by the UPF information, the method further includes:
executing a configuration update mechanism of the gateway by means of the PCF, and providing the URSP policy for the gateway by means of the PCF, so as to instruct the gateway to register association information and user location information according to the URSP policy; and/or,
providing, by means of the PCF, URSP route policy information requested by the EAS AF, and matching edge application traffic by means of the URSP route policy information, wherein the URSP route policy information includes at least one of the following: a data network name (DNN), and single network slice selection assistance information (S-NSSAI); the edge application traffic is used for indicating the traffic in a direction from the EAC to the EAS; and/or,
providing a policy service by means of the PCF, wherein the policy service is used for binding a UE to the AMF.

By means of the above embodiments, an application service request mechanism between the EAC and the gateway may be implemented. To further illustrate the application service request mechanism between the EAC and the gateway, a description will be given below by way of an exemplary embodiment:

### Exemplary Embodiment 3

Fig. 2 is a first schematic flowchart of an application service request mechanism between an EAC and a gateway provided according to an exemplary embodiment of the present application. As shown in Fig. 2, in the present exemplary embodiment, the workflow of the application service request mechanism between the EAC and the gateway, such as the 5G-RG, is as follows:
S401, the EAC sends application service request information to the 5G-RG; and
S402, the 5G-RG is triggered to register an EAS access service to an edge application server application function (EAS AF) of the 5GC, so as to complete the registration of the EAS service, and applies application service response information to the EAC after receiving an application service registration completion notification from the 5GC.

An interface of the EAC corresponding to the 5G-RG uses a WiFi protocol, and a message application layer, which corresponds to application client service request information sent by the EAC, is encapsulated with the DNS information of the application service, the ID information of the EAC, and the like, so as to be used for the access authentication of the EAC by the EAS.

Optionally, the above interface needs to support to carry different types of edge application service content.

Optionally, before the step S401 is executed, the 5G-RG needs to pass user access registration authentication, so as to acquire the information from the 5G-RG to the corresponding EAS by means of the 5GC, that is, implement the discovery of the EAS. Fig. 3 is a schematic flowchart of an EAS discovery mechanism provided according to an exemplary embodiment of the present application, and as shown in Fig. 3, in the present exemplary embodiment, the workflow of the EAS discovery mechanism is shown as follows:
S501, the 5G-RG implements the registration authentication to the 5GC by means of a user registration implementation mechanism. The user registration information used by the 5G-RG is SUPI or SUCI encapsulation in the LINE-ID format.
S502, the 5G-RG requests a policy configuration to the EAS, and the AMF requests the PCF, so that the PCF acquires policy information from the 5G-RG to the EAS by means of searching for the URSP policy.

It should be noted that, the above EAS discovery mechanism needs to be implemented on the basis of the URSP policy. The URSP policy may be configured locally by means of the 5G-RG, and may also be configured in a 5G-RG registration process.

During the execution process of the step S502, the policy information from the 5G-RG to the EAS is further used by the AMF to establish the policy-related link between the edge application service of the 5G-RG and the PCF; on the other hand, the configuration update mechanism of the gateway may also be executed by means of the PCF, and the URSP policy is provided for the gateway by means of the PCF, so as to instruct the gateway to register the association information and the user location information according to the URSP policy; on the other hand, the URSP route policy information requested by the EAS AF may also be provided by means of the PCF, and the edge application traffic is matched by means of the URSP route policy information; and on the other hand, the policy service may also be provided by means of the PCF, and the policy service is used for binding the UE to the AMF. The URSP policy information includes at least one of the following: DNN, and S-NSSAI. The edge application traffic is used for indicating the traffic in the direction from the EAC to the EAS.

In addition, an operator may also implement the above process by means of configuring a local policy to the UE.

By means of the process of the S502, the 5G-RG acquires the IP address, the UPF information and the like of the EAS.

S503, the EAC sends an edge application service registration request to the 5G-RG.

S504, after receiving the policy information corresponding to the corresponding EAS in the S502, the 5G-RG may establish the PDU session to the UPF, wherein the PDU session is used for carrying the traffic from the AC to the EAS, the traffic redirection and the like.

Optionally, the EAC may also send the application service request to the 5G-RG, and determine, by means of the communication with the 5GC, that the EAS AF completes the service access authentication of an AC user.

In an embodiment, the edge application discovery method in the embodiment of the present application further includes: sending an application service request message to the gateway, triggering the EAS access service mechanism by means of the gateway, so as to forward the application service request message to the EAS AF of the core network, and then requesting an EAS service from the core network, wherein the application service request message is used for indicating the EAS service, which is requested by the EAC from the core network; and receiving an application service request rejection message replied by the gateway, wherein the application service request rejection message is generated by the gateway according to an application service registration rejection message sent by the core network, and the application service registration rejection message is used for indicating that the core network does not discover the EAS service provided for the EAC.

By means of the above embodiment, in the application service request mechanism between the EAC and the gateway, processing in a scenario in which the core network does not discover the corresponding EAS service may be implemented. To further illustrate the application service request mechanism between the EAC and the gateway, a description will be given below by way of an exemplary embodiment:

### Exemplary Embodiment 4

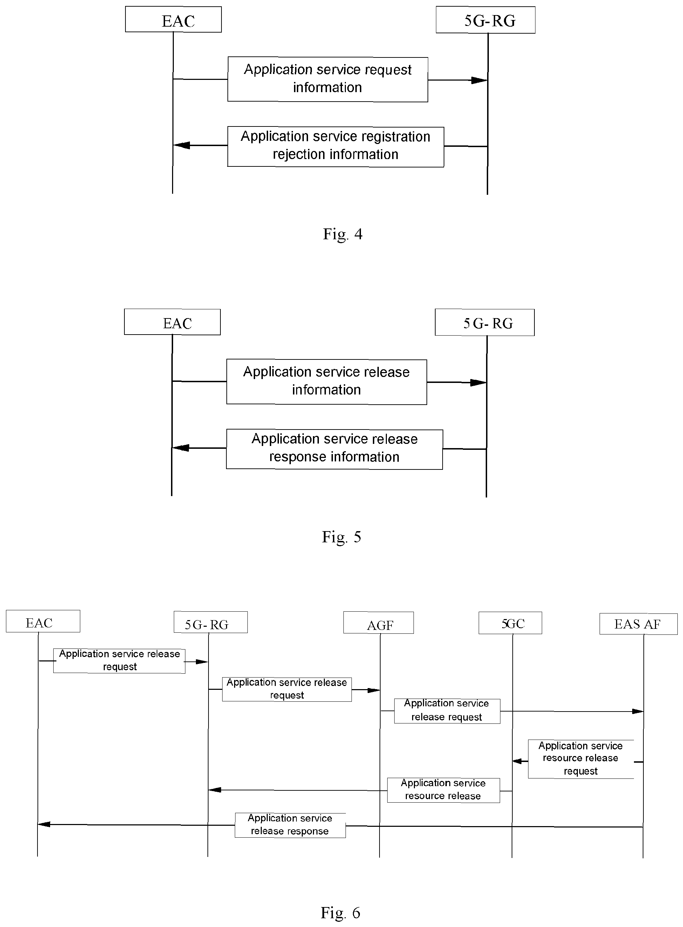

Fig. 4 is a second schematic flowchart of an application service request mechanism between an EAC and a gateway provided according to an exemplary embodiment of the present application. As shown in Fig. 4, in the present exemplary embodiment, the workflow of the application service request mechanism between the EAC and the gateway, such as the 5G-RG, is as follows:
S601, the EAC sends application client service request information to the 5G-RG; and
S602, the 5G-RG is triggered to register an EAS access service to the EAS AF of the 5GC, discovers that the 5GC has no requested EAS service, receives application service rejection information from the 5GC, and replies application service registration rejection information to the EAC.

In an embodiment, the edge application discovery method in the embodiment of the present application further includes: sending an application service release message to the gateway, triggering an EAS access service release mechanism by means of the gateway, so as to forward the application service release message to the EAS AF of the core network, and then requesting the core network to release an EAS service, wherein the application service release message is used for indicating the EAS service, which is requested by the EAC to be released from the core network; and receiving an application service release response message replied by the gateway, wherein the application service release response message is generated by the gateway according to an application service release completion message sent by the core network, and the application service release completion message is used for indicating that the core network has completed releasing the EAS service for the EAC.

In an embodiment, the step of sending the application service release message to the gateway further includes: sending the application service release message to the gateway, and sending, by the gateway, the application service release message to the EAS AF of the core network by means of an access gateway function (AGF), so as to instruct the EAS AF to initiate an application service release request to the core network according to the application service release message; and
if the core network determines that the EAS service monopolizes PDU resource information, initiating, by the core network, an application service resource release request, notifying the gateway by means of the AGF, and releasing a user plane resource to the gateway.

By means of the above embodiment, an application service release mechanism between the EAC and the gateway may be implemented. To further illustrate the application service release mechanism between the EAC and the gateway, a description will be given below by way of an exemplary embodiment:

### Exemplary Embodiment 5

Fig. 5 is a schematic flowchart of an application service release mechanism between an EAC and a gateway provided according to an exemplary embodiment of the present application. As shown in Fig. 5, in the present exemplary embodiment, the workflow of the application service release mechanism between the EAC and the gateway, such as the 5G-RG, is as follows:
S701, the EAC sends application service release information to the 5G-RG; and
S702, the 5G-RG is triggered to send EAS access service release information to the EAS AF of the 5GC, and replies application service release response information to the EAC after receiving edge application service release information from the 5GC.

In the present exemplary embodiment, the release or revocation of the application service corresponding to the EAC may cause the release of a PDU resource. In this regard, after receiving the application service release information sent by the 5G-RG, the 5GC EAS AF may notify the PCF and the AMF, so as to trigger the AMF to send a PDU resource release request. Fig. 6 is a schematic flowchart of PDU resource release provided according to an exemplary embodiment of the present application. As shown in Fig. 6, the workflow of the PDU resource release is as follows:
In the step S702, the EAS AF may also initiate the application service release request to the 5GC, the 5GC checks whether the EAS service corresponding to the EAC ID monopolizes the PDU resource information, if so, the 5GC initiates the application service resource release request to the AGF, and releases the user plane resource to the 5G-RG by means of the AGF, and the 5G-RG notifies the EAC.

In an embodiment, the edge application discovery method in the embodiment of the present application further includes: sending an application service update message to the gateway, triggering an EAS access service update mechanism by means of the gateway, so as to forward the application service update message to the EAS AF of the core network, and then requesting the core network to update an EAS service, wherein the application service update message is used for indicating the EAS service, which is requested by the EAC to be updated by the core network; and receiving an application service update response message replied by the gateway, wherein the application service update response message is generated by the gateway according to an application service update completion message sent by the core network, and the application service update completion message is used for indicating that the core network has updated the EAS service.

In an embodiment, the step: sending the application service update message to the gateway, triggering the EAS access service update mechanism by means of the gateway, so as to forward the application service update message to the EAS AF of the core network, and then requesting the core network to update the EAS service, further includes: sending the application service update message to the gateway, triggering the EAS access service update mechanism by means of the gateway, so as to forward the application service update message to the EAS AF of the core network, and then instructing the EAS AF to select an application service of an update EAS for the EAC according to the application service update message.

In an embodiment, the step of the EAS AF selecting the application service of the update EAS for the EAC according to the application service update message includes:
requesting, by the EAS AF, update EAS information from the PCF of the core network, wherein the update EAS information at least includes an identifier of the update EAS, and the update EAS is an EAS that meets the requirements corresponding to the EAS service indicated by the application service update message;
recording, by the EAS AF, the correspondence between the identifier of the EAC and the identifier of the update EAS;
re-selecting, by the EAS AF, the UPF according to the update EAS information, instructing the gateway to establish a PDU session between the gateway and the re-selected UPF; and
sending, by the EAS AF, the application service update completion message to the gateway by means of the PDU session, so as to instruct the gateway to generate the application service update response message according to the application service update completion message to reply to the EAC.

By means of the above embodiments, an application service update mechanism between the EAC and the gateway may be implemented. To further illustrate the application service update mechanism between the EAC and the gateway, a description will be given below by way of an exemplary embodiment:

### Exemplary Embodiment 6

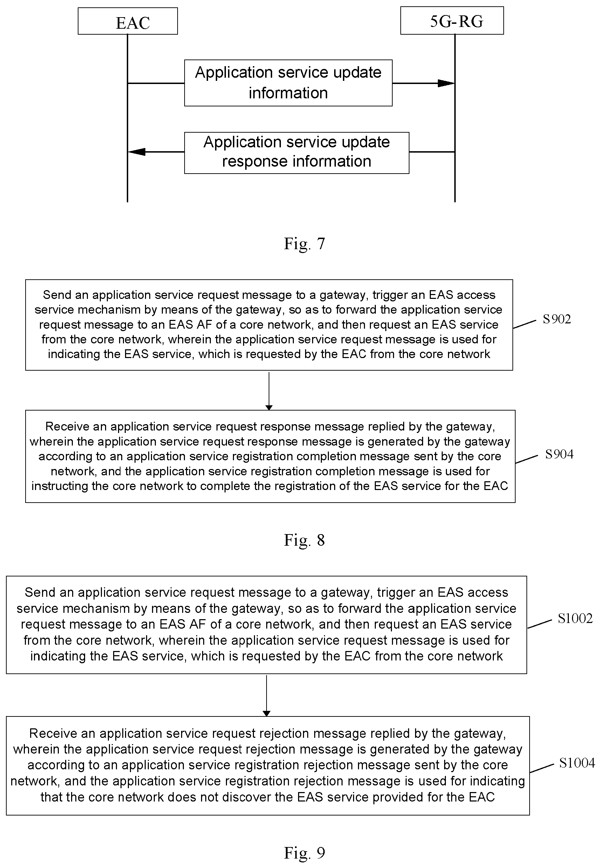

Fig. 7 is a schematic flowchart of an application service update mechanism between an EAC and a gateway provided according to an exemplary embodiment of the present application. As shown in Fig. 7, in the present exemplary embodiment, the workflow of the application service update mechanism between the EAC and the gateway, such as the 5G-RG, is as follows:
S801, the EAC sends application service update information to the 5G-RG; and
S802, the 5G-RG is triggered to send EAS access service update information to the EAS AF of the 5GC, and replies application service update response information to the EAC after receiving edge application service update information from the 5GC.

Optionally, the EAC sends an application service update request, and triggers the RG to send the service update request to the EAS AF of the 5GC, and the EAS AF may select a new suitable EAS for satisfying the application service of the AC according to the updated service request. The process of selecting the new suitable EAS is described below:
The EAS AF requests the PCF of the 5GC, so as to request EAS information that meets the requirements of the application service of the updated AC, including EAS ID, EAS IP address, and the like, which brings about possible re-discovery of the EAS. For an EAS re-discovery mechanism, reference is made to an application service request response process.

Optionally, the EAS AF needs to record the correspondence between the EAC ID and the new EAS ID.

Optionally, the migration of the EAS brings a re-selection of the UPF.

Optionally, the 5G-RG needs to establish a PDU session from the 5G-RG to the re-selected UPF.

Optionally, the EAS AF replies application service update completion information to the EAC.

By means of the embodiment of the present application, on the basis of implementing the discovery of the edge application in the 5G WWC scenario, the communication requirements of the application service request between the EAC and the gateway, for example, the 5G-RG, and EAS formed during update and deletion, can be further implemented, thereby further supporting the implementation of the MEC service in the 5G WWC scenario.

In another aspect, the embodiments of the present application further provide an edge application service support method, which is applied to an EAC. Fig. 8 is a first flowchart of an edge application service support method provided according to an embodiment of the present application, and as shown in Fig. 8, the edge application service support method in the embodiment of the present application includes:
S902, sending an application service request message to a gateway, triggering an EAS access service mechanism by means of the gateway, so as to forward the application service request message to an EAS application function (AF) of a core network, and then requesting an EAS service from the core network, wherein the application service request message is used for indicating the EAS service, which is requested by the EAC from the core network; and
S904, receiving an application service request response message replied by the gateway, wherein the application service request response message is generated by the gateway according to an application service registration completion message sent by the core network, and the application service registration completion message is used for instructing the core network to complete the registration of the EAS service for the EAC.

In an embodiment, the application service request message carries application authentication information, wherein the application authentication information is used for instructing the EAS to perform access authentication on the EAC, and the application authentication information includes at least one of the following: domain name system (DNS) information of the application service, and identity document (ID) information of the EAC.

In an embodiment, the step of sending the application service request message to the gateway includes: sending the application service request message to the gateway by means of a third interface, wherein the third interface supports to carry content corresponding to a plurality of application services.

In an embodiment, before the step of sending the application service request message to the gateway, the method further includes:
sending, by the gateway, a registration authentication request to the core network, wherein the authentication registration request is used for instructing the gateway to perform registration authentication on the core network;
initiating, by the gateway, a request to a PCF by means of an access and mobility management function (AMF), so that the PCF acquires policy information from the gateway to the EAS by means of searching for a preset URSP policy, wherein the policy information includes at least one of the following: an IP address of the EAS, user plane function (UPF) information corresponding to the EAS; and
establishing, by the gateway and according to the policy information, a PDU session between the gateway and an UPF indicated by the UPF information, wherein the PDU session is used for carrying the traffic from the EAC to the EAS, and/or, a redirection operation of the traffic.

In an embodiment, the registration authentication request is generated by subscription permanent identifier (SUPI) encapsulation or subscription concealed identifier (SUCI) encapsulation based on an LINE-ID format.

In an embodiment, the URSP policy is configured locally, or the URSP policy is configured during the process of the gateway sending the registration authentication request to the core network.

In an embodiment, the policy information is further used by the AMF to establish a policy-related link between the edge application service of the gateway and the PCF; and after the gateway establishes, according to the policy information, the PDU session between the gateway and the UPF indicated by the UPF information, the method further includes:
executing a configuration update mechanism of the gateway by means of the PCF, and providing the URSP policy for the gateway by means of the PCF, so as to instruct the gateway to register association information and user location information according to the URSP policy; and/or,
providing, by means of the PCF, URSP route policy information requested by the EAS AF, and matching edge application traffic by means of the URSP route policy information, wherein the URSP route policy information includes at least one of the following: a data network name (DNN), and S-NSSAI; the edge application traffic is used for indicating the traffic in a direction from the EAC to the EAS; and/or,
providing a policy service by means of the PCF, wherein the policy service is used for binding a UE to the AMF.

In another aspect, the embodiments of the present application further provide an edge application service support method, which is applied to an EAC. Fig. 9 is a second flowchart of an edge application service support method provided according to an embodiment of the present application, and as shown in Fig. 9, the edge application service support method in the embodiment of the present application includes:
S1002, sending an application service request message to a gateway, triggering an EAS access service mechanism by means of the gateway, so as to forward the application service request message to an EAS AF of a core network, and then requesting an EAS service from the core network, wherein the application service request message is used for indicating the EAS service, which is requested by the EAC from the core network; and
S1004, receiving an application service request rejection message replied by the gateway, wherein the application service request rejection message is generated by the gateway according to an application service registration rejection message sent by the core network, and the application service registration rejection message is used for indicating that the core network does not discover the EAS service provided for the EAC.

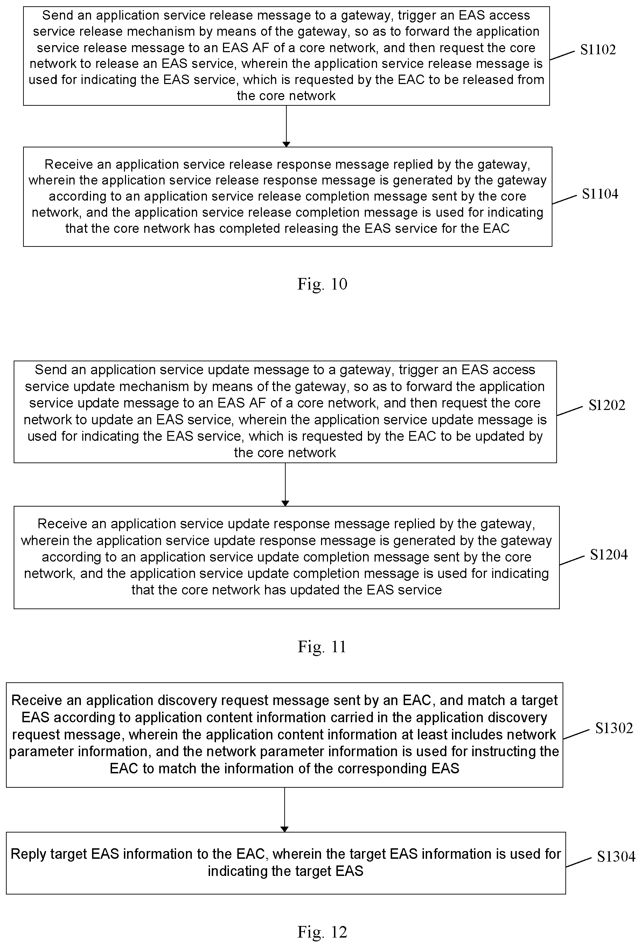

In another aspect, the embodiments of the present application further provide an edge application service support method, which is applied to an EAC. Fig. 10 is a third flowchart of an edge application service support method provided according to an embodiment of the present application, and as shown in Fig. 10, the edge application service support method in the embodiment of the present application includes:
S1102, sending an application service release message to a gateway, triggering an EAS access service release mechanism by means of the gateway, so as to forward the application service release message to an EAS AF of a core network, and then requesting the core network to release an EAS service, wherein the application service release message is used for indicating the EAS service, which is requested by the EAC to be released from the core network; and
S1104, receiving an application service release response message replied by the gateway, wherein the application service release response message is generated by the gateway according to an application service release completion message sent by the core network, and the application service release completion message is used for indicating that the core network has completed releasing the EAS service for the EAC.

In an embodiment, the step of sending the application service release message to the gateway further includes: sending the application service release message to the gateway, and sending, by the gateway, the application service release message to the EAS AF of the core network by means of an access gateway function (AGF), so as to instruct the EAS AF to initiate an application service release request to the core network according to the application service release message; and if the core network determines that the EAS service monopolizes PDU resource information, initiating, by the core network, an application service resource release request, notifying the gateway by means of the AGF, and releasing a user plane resource to the gateway.

In another aspect, the embodiments of the present application further provide an edge application service support method, which is applied to an EAC. Fig. 11 is a fourth flowchart of an edge application service support method provided according to an embodiment of the present application, and as shown in Fig. 11, the edge application service support method in the embodiment of the present application includes:
S1202, sending an application service update message to a gateway, triggering an EAS access service update mechanism by means of the gateway, so as to forward the application service update message to an EAS AF of a core network, and then requesting the core network to update an EAS service, wherein the application service update message is used for indicating the EAS service, which is requested by the EAC to be updated by the core network; and
S1204, receiving an application service update response message replied by the gateway, wherein the application service update response message is generated by the gateway according to an application service update completion message sent by the core network, and the application service update completion message is used for indicating that the core network has updated the EAS service.

In an embodiment, the step: sending the application service update message to the gateway, triggering the EAS access service update mechanism by means of the gateway, so as to forward the application service update message to the EAS AF of the core network, and then requesting the core network to update the EAS service, further includes: sending the application service update message to the gateway, triggering the EAS access service update mechanism by means of the gateway, so as to forward the application service update message to the EAS AF of the core network, and then instructing the EAS AF to select an application service of an update EAS for the EAC according to the application service update message.

In an embodiment, the step of the EAS AF selecting the application service of the update EAS for the EAC according to the application service update message includes:
requesting, by the EAS AF, update EAS information from the PCF of the core network, wherein the update EAS information at least includes an identifier of the update EAS, and the update EAS is an EAS that meets the requirements corresponding to the EAS service indicated by the application service update message;
recording, by the EAS AF, the correspondence between the identifier of the EAC and the identifier of the update EAS;
re-selecting, by the EAS AF, the UPF according to the update EAS information, instructing the gateway to establish a PDU session between the gateway and the re-selected UPF; and
sending, by the EAS AF, the application service update completion message to the gateway by means of the PDU session, so as to instruct the gateway to generate the application service update response message according to the application service update completion message to reply to the EAC.

In another aspect, the embodiments of the present application further provide an edge application discovery method, which is applied to a core network. Fig. 12 is a second flowchart of an edge application discovery method provided according to an embodiment of the present application, and as shown in Fig. 12, the edge application discovery method in the embodiment of the present application includes:
S1302, receiving an application discovery request message sent by an EAC, and matching a target EAS according to application content information carried in the application discovery request message, wherein the application content information at least includes network parameter information, and the network parameter information is used for instructing the EAC to match the information of the corresponding EAS; and
S1304, replying the target EAS information to the EAC, and the target EAS information is used for indicating the target EAS.

It should be noted that, the remaining embodiments and technical effects of the edge application discovery method applied to the core network correspond to those of the foregoing edge application discovery method applied to the EAC, and thus details are not described herein again.

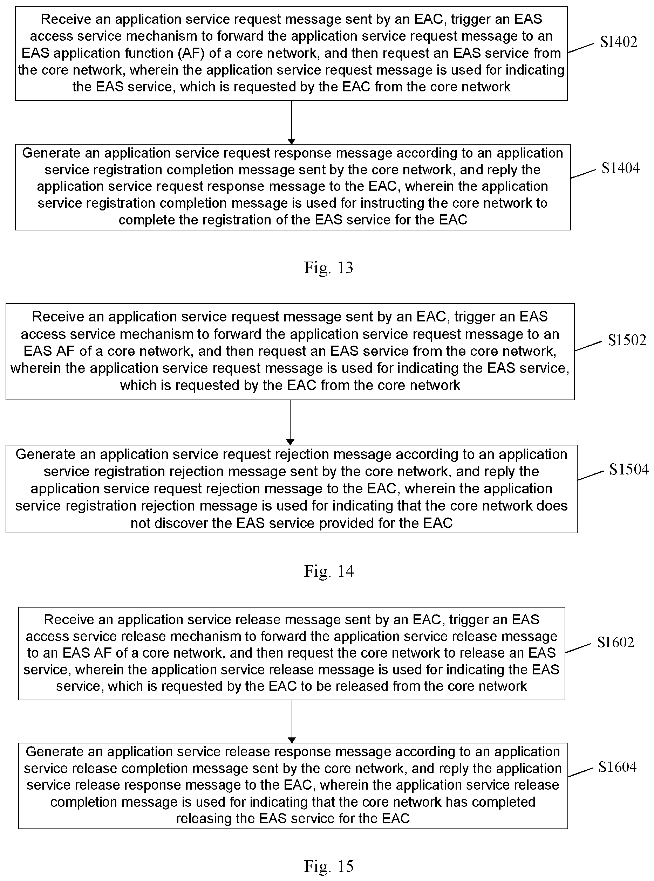

In another aspect, the embodiments of the present application further provide an edge application service support method, which is applied to a gateway. Fig. 13 is a fifth flowchart of an edge application service support method provided according to an embodiment of the present application, and as shown in Fig. 13, the edge application service support method in the embodiment of the present application includes:
S1402, receiving an application service request message sent by an EAC, triggering an EAS access service mechanism to forward the application service request message to an EAS application function (AF) of a core network, and then requesting an EAS service from the core network, wherein the application service request message is used for indicating the EAS service, which is requested by the EAC from the core network; and
S1404, generating an application service request response message according to an application service registration completion message sent by the core network, and replying the application service request response message to the EAC, wherein the application service registration completion message is used for instructing the core network to complete the registration of the EAS service for the EAC.

It should be noted that, the remaining embodiments and technical effects of the edge application service support method applied to the gateway correspond to those of the foregoing edge application service support method applied to the EAC, and thus details are not described herein again.

In another aspect, the embodiments of the present application further provide an edge application service support method, which is applied to a gateway. Fig. 14 is a sixth flowchart of an edge application service support method provided according to an embodiment of the present application, and as shown in Fig. 14, the edge application service support method in the embodiment of the present application includes:
S1502, receiving an application service request message sent by an EAC, triggering an EAS access service mechanism to forward the application service request message to an EAS AF of a core network, and then requesting an EAS service from the core network, wherein the application service request message is used for indicating the EAS service, which is requested by the EAC from the core network; and
S1504, generating an application service request rejection message according to an application service registration rejection message sent by the core network, and replying the application service request rejection message to the EAC, wherein the application service registration rejection message is used for indicating that the core network does not discover the EAS service provided for the EAC.

It should be noted that, the remaining embodiments and technical effects of the edge application service support method applied to the gateway correspond to those of the foregoing edge application service support method applied to the EAC, and thus details are not described herein again.

In another aspect, the embodiments of the present application further provide an edge application service support method, which is applied to a gateway. Fig. 15 is a seventh flowchart of an edge application service support method provided according to an embodiment of the present application, and as shown in Fig. 15, the edge application service support method in the embodiment of the present application includes:
S1602, receiving an application service release message sent by an EAC, triggering an EAS access service release mechanism to forward the application service release message to an EAS AF of a core network, and then requesting the core network to release an EAS service, wherein the application service release message is used for indicating the EAS service, which is requested by the EAC to be released from the core network; and
S1604, generating an application service release response message according to an application service release completion message sent by the core network, and replying the application service release response message to the EAC, wherein the application service release completion message is used for indicating that the core network has completed releasing the EAS service for the EAC.

It should be noted that, the remaining embodiments and technical effects of the edge application service support method applied to the gateway correspond to those of the foregoing edge application service support method applied to the EAC, and thus details are not described herein again.

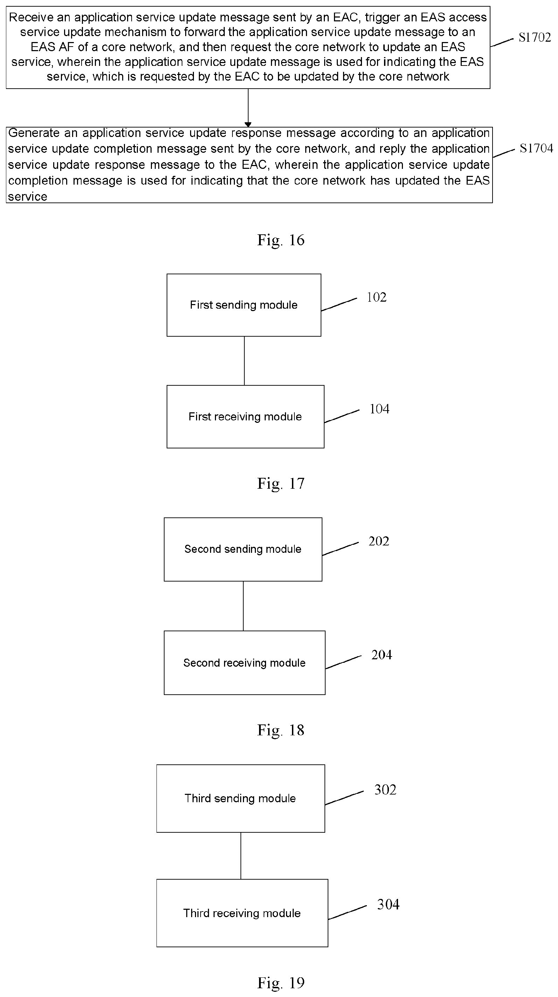

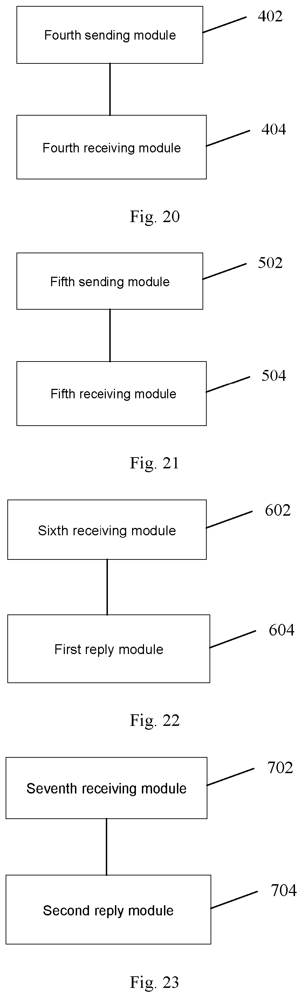

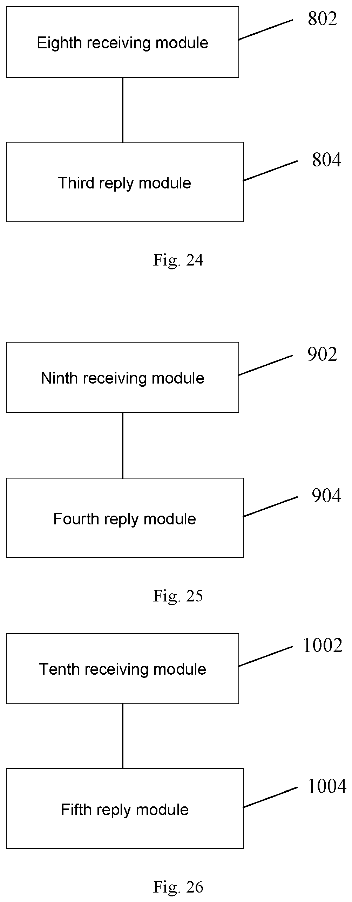

In another aspect, the embodiments of the present application further provide an edge application service support method, which is applied to a gateway. Fig. 16 is an eighth flowchart of an edge application service support method provided according to an embodiment of the present application, and as shown in Fig. 16, the edge application service support method in the embodiment of the present application includes:
S1702, receiving an application service update message sent by an EAC, triggering an EAS access service update mechanism to forward the application service update message to an EAS AF of a core network, and then requesting the core network to update an EAS service, wherein the application service update message is used for indicating the EAS service, which is requested by the EAC to be updated by the core network; and
S1704, generating an application service update response message according to an application service update completion message sent by the core network, and replying the application service update response message to the EAC, wherein the application service update completion message is used for indicating that the core network has updated the EAS service.

It should be noted that, the remaining embodiments and technical effects of the edge application service support method applied to the gateway correspond to those of the foregoing edge application service support method applied to the EAC, and thus details are not described herein again.

By means of the descriptions of the above embodiments, those skilled in the art may clearly understand that, the method according to the above embodiments may be implemented by means of software plus a necessary universal hardware platform, and of course, may also be implemented by hardware, but the former is a better embodiment in many cases. Based on this understanding, the technical solutions of the present application essentially or the part contributing to the prior art may be embodied in the form of a software product, the computer software product is stored in a storage medium (such as an ROM/RAM, a magnetic disk and an optical disk), and include several instructions for instructing a computer device (which may be a mobile phone, a computer, a server, or a network device and the like) to execute the method in various embodiments of the present application.

In another aspect, the embodiments of the present application further provide an edge application discovery apparatus, which is applied to an EAC. The apparatus is used for implementing the above embodiments and preferred embodiments, and what has been described will not be repeated again. As used below, the term "module" may implement a combination of software and/or hardware of predetermined functions. Although the apparatus described in the following embodiments is preferably implemented in software, implementations of hardware, or a combination of software and hardware are also possible and conceivable.

Fig. 17 is a first structural block diagram of an edge application discovery apparatus provided according to an embodiment of the present application, and shown in Fig. 17, the edge application discovery apparatus in the embodiment of the present application includes:
a first sending module 102, configured to send an application discovery request message to a core network, so that the core network matches a target edge application server (EAS) according to application content information carried in the application discovery request message, wherein the application content information at least includes network parameter information, and the network parameter information is used for instructing the EAC to match the information of the corresponding EAS; and
a first receiving module 104, configured to receive target EAS information replied by the core network, wherein the target EAS information is used for indicating the target EAS.
It should be noted that, the remaining embodiments and technical effects of the edge application discovery apparatus applied to the EAC correspond to those of the foregoing edge application discovery method applied to the EAC, and thus details are not described herein again.

## Claims

1. An edge application discovery method, applied to an edge application client, EAC, and comprising:
sending (S102) an application discovery request message to a core network, so that the core network matches a target edge application server, EAS, according to application content information carried in the application discovery request message, wherein the application content information at least comprises network parameter information, and the network parameter information is used for instructing the EAC to match the information of the corresponding EAS; and
receiving (S104) target EAS information replied by the core network, wherein the target EAS information is used for indicating the target EAS;
wherein sending the application discovery request message to the core network comprises:
sending the application discovery request message to a gateway being a 5G-RG by means of a preset first interface, and triggering the application discovery request service to the core network by means of the 5G-RG, so as to send the application discovery request message to the core network; or
sending the application discovery request message to a gateway being a FN-RG by means of a preset second interface, and triggering the application request service to a proxy by means of the FN-RG, so as to send the application discovery request message to the core network by means of the proxy.

2. The method according to claim 1, wherein the core network matching the target EAS according to the application content information carried in the application discovery request message comprises:
acquiring, by the core network, the network parameter information according to the application discovery request message, and initiating a matching request by means of a policy control function, PCF, so as to match the target EAS by means of a preset user equipment route selection policy, URSP.

3. The method according to claim1, wherein before sending the application discovery request message to the 5G-RG by means of the preset first interface, the method further comprises:
registering the 5G-RG to the core network.
or, wherein receiving the target EAS information replied by the core network comprises:
receiving the target EAS information replied by the 5G-RG, wherein the target EAS information is sent by the core network to the 5G-RG.

4. The method according to claim 1, wherein before triggering the application request service to the proxy by means of the FN-RG, the method further comprises:
registering the FN-RG to the core network by means of the proxy;
or, wherein receiving the target EAS information replied by the core network comprises:
receiving the target EAS information replied by the FN-RG, wherein the target EAS information is sent by the core network to the FN-RG by means of the proxy.

5. The method according to claim 1, wherein the network parameter information comprises at least one of the following: a domain name, DN, of the target EAS, an edge data network, EDN, address of the target EAS, and network slice selection assistance information, NSSAI, of the EAC;
or, wherein the target EAS information comprises at least one of the following: an Internet Protocol, IP, address of the target EAS, domain name information of the target EAS, and identification information of the target EAS.

6. The method according to claim 1, wherein the method further comprises:
sending an application service request message to the gateway, triggering an EAS access service mechanism by means of the gateway, so as to forward the application service request message to an EAS application function, AF, of the core network, and then requesting an EAS service from the core network, wherein the application service request message is used for indicating the EAS service, which is requested by the EAC from the core network; and
receiving an application service request response message replied by the gateway, wherein the application service request response message is generated by the gateway according to an application service registration completion message sent by the core network, and the application service registration completion message is used for instructing the core network to complete the registration of the EAS service for the EAC.

7. The method according to claim 6, wherein the application service request message carries application authentication information, wherein the application authentication information is used for instructing the EAS to perform access authentication on the EAC, and the application authentication information comprises at least one of the following: domain name system, DNS, information of the application service, and identity document, ID, information of the EAC;
or, wherein sending the application service request message to the gateway comprises:
sending the application service request message to the gateway by means of a third interface,
wherein the third interface supports to carry content corresponding to a plurality of application services;
or, wherein before sending the application service request message to the gateway, the method further comprises:
sending, by the gateway, a registration authentication request to the core network, wherein the authentication registration request is used for instructing the gateway to perform registration authentication on the core network;
initiating, by the gateway, a request to a PCF by means of an access and mobility management function, AMF, so that the PCF acquires policy information from the gateway to the EAS by means of searching for a preset URSP policy, wherein the policy information comprises at least one of the following: an IP address of the EAS, user plane function, UPF, information corresponding to the EAS; and
establishing, by the gateway and according to the policy information, a PDU session between the gateway and an UPF indicated by the UPF information, wherein the PDU session is used for carrying the traffic from the EAC to the EAS, and/or, a redirection operation of the traffic.

8. The method according to claim 7, wherein the registration authentication request is generated by subscription permanent identifier, SUPI, encapsulation or subscription concealed identifier, SUCI, encapsulation based on an LINE-ID format;
or, wherein the URSP policy is configured locally, or the URSP policy is configured during the process of the gateway sending the registration authentication request to the core network;
or, wherein the policy information is further used by the AMF to establish a policy-related link between the edge application service of the gateway and the PCF; and after the gateway establishes, according to the policy information, the PDU session between the gateway and the UPF indicated by the UPF information, the method further comprises:
executing a configuration update mechanism of the gateway by means of the PCF, and providing the URSP policy for the gateway by means of the PCF, so as to instruct the gateway to register association information and user location information according to the URSP policy; and/or, providing, by means of the PCF, URSP route policy information requested by the EAS AF, and
matching edge application traffic by means of the URSP route policy information, wherein the URSP route policy information comprises at least one of the following: a data network name, DNN, and S-NSSAI; the edge application traffic is used for indicating the traffic in a direction from the EAC to the EAS; and/or,
providing a policy service by means of the PCF, wherein the policy service is used for binding a UE to the AMF.

9. The method according to claim 1, wherein the method further comprises:
sending an application service request message to the gateway, triggering an EAS access service mechanism by means of the gateway, so as to forward the application service request message to the EAS AF of the core network, and then requesting an EAS service from the core network, wherein the application service request message is used for indicating the EAS service, which is requested by the EAC from the core network; and
receiving an application service request rejection message replied by the gateway, wherein the application service request rejection message is generated by the gateway according to an application service registration rejection message sent by the core network, and the application service registration rejection message is used for indicating that the core network does not discover the EAS service provided for the EAC.

10. The method according to claim 1, wherein the method further comprises:
sending an application service release message to the gateway, triggering an EAS access service release mechanism by means of the gateway, so as to forward the application service release message to the EAS AF of the core network, and then requesting the core network to release an EAS service, wherein the application service release message is used for indicating the EAS service, which is requested by the EAC to be released from the core network; and
receiving an application service release response message replied by the gateway, wherein the application service release response message is generated by the gateway according to an application service release completion message sent by the core network, and the application service release completion message is used for indicating that the core network has completed releasing the EAS service for the EAC;
preferably, wherein sending the application service release message to the gateway further comprises:
sending the application service release message to the gateway, and sending, by the gateway, the application service release message to the EAS AF of the core network by means of an access gateway function, AGF, so as to instruct the EAS AF to initiate an application service release request to the core network according to the application service release message; and when the core network determines that the EAS service monopolizes PDU resource information, initiating, by the core network, an application service resource release request, notifying the gateway by means of the AGF, and releasing a user plane resource to the gateway.

11. The method according to claim 1, further comprising:
sending an application service update message to the gateway, triggering an EAS access service update mechanism by means of the gateway, so as to forward the application service update message to the EAS AF of the core network, and then requesting the core network to update an EAS service, wherein the application service update message is used for indicating the EAS service, which is requested by the EAC to be updated by the core network; and
receiving an application service update response message replied by the gateway, wherein the application service update response message is generated by the gateway according to an application service update completion message sent by the core network, and the application service update completion message is used for indicating that the core network has updated the EAS service;
preferably, wherein sending the application service update message to the gateway, triggering the EAS access service update mechanism by means of the gateway, so as to forward the application service update message to the EAS AF of the core network, and then requesting the core network to update the EAS service, further comprises:
sending the application service update message to the gateway, triggering the EAS access service update mechanism by means of the gateway, so as to forward the application service update message to the EAS AF of the core network, and then instructing the EAS AF to select an application service of an update EAS for the EAC according to the application service update message;
preferably, wherein the EAS AF selecting the application service of the update EAS for the EAC according to the application service update message comprises:
requesting, by the EAS AF, update EAS information from the PCF of the core network, wherein the update EAS information at least comprises an identifier of the update EAS, and the update EAS is an EAS that meets the requirements corresponding to the EAS service indicated by the application service update message;
recording, by the EAS AF, the correspondence between the identifier of the EAC and the identifier of the update EAS;
re-selecting, by the EAS AF, the UPF according to the update EAS information, instructing the gateway to establish a PDU session between the gateway and the re-selected UPF; and
sending, by the EAS AF, the application service update completion message to the gateway by means of the PDU session, so as to instruct the gateway to generate the application service update response message according to the application service update completion message to reply to the EAC.

12. An edge application discovery apparatus, applied to an edge application client, EAC, and comprises:
a first sending module (102), configured to send an application discovery request message to a core network, so that the core network matches a target edge application server, EAS, according to application content information carried in the application discovery request message, wherein the application content information at least comprises network parameter information, and the network parameter information is used for instructing the EAC to match the information of the corresponding EAS; and
a first receiving module (104), configured to receive target EAS information replied by the core network, wherein the target EAS information is used for indicating the target EAS;
wherein the first sending module (102) is further configured to:
send the application discovery request message to a gateway being a 5G-RG by means of a preset first interface, and trigger the application discovery request service to the core network by means of the 5G-RG, so as to send the application discovery request message to the core network; or
send the application discovery request message to a gateway being a FN-RG by means of a preset second interface, and trigger the application request service to a proxy by means of the FN-RG, so as to send the application discovery request message to the core network by means of the proxy.

## Patentansprüche

1. Verfahren zum Erkennen von Edge-Anwendungen, das auf einen Edge-Anwendungs-Client, EAC, angewendet wird und umfassend:
Senden (S102) einer Anwendungserkennungsanforderungsnachricht an ein Kernnetzwerk, sodass das Kernnetzwerk einen Ziel-Edge-Anwendungsserver, EAS, gemäß Anwendungsinhaltsinformationen angleicht, die in der Anwendungserkennungsanforderungsnachricht übertragen werden, wobei die Anwendungsinhaltsinformationen mindestens Netzwerkparameterinformationen umfassen und die Netzwerkparameterinformationen zum Anweisen des EAC verwendet werden, die Informationen des entsprechenden EAS anzugleichen; und
Empfangen (S104) von Ziel-EAS-Informationen, die durch das Kernnetzwerk geantwortet werden, wobei die Ziel-EAS-Informationen zum Anzeigen des Ziel-EAS verwendet werden;
wobei das Senden der Anwendungserkennungsanforderungsnachricht an das Kernnetzwerk umfasst:
Senden der Anwendungserkennungsanforderungsnachricht an ein Gateway, das ein 5G-RG ist, mittels einer voreingestellten ersten Schnittstelle und Auslösen des Anwendungserkennungsanforderungsdienstes an das Kernnetzwerk mittels des 5G-RG, um die Anwendungserkennungsanforderungsnachricht an das Kernnetzwerk zu senden; oder
Senden der Anwendungserkennungsanforderungsnachricht an ein Gateway, das ein FN-RG ist, mittels einer voreingestellten zweiten Schnittstelle und Auslösen des Anwendungsanforderungsdienstes an einen Proxy mittels des FN-RG, um die Anwendungserkennungsanforderungsnachricht mittels des Proxys an das Kernnetzwerk zu senden.

2. Verfahren nach Anspruch 1, wobei, das Angleichen des Kernnetzwerks des Ziel-EAS gemäß den Anwendungsinhaltsinformationen, die in der Anwendungserkennungsanforderungsnachricht übertragen werden, ist, umfasst:
Erfassen, durch das Kernnetzwerk, der Netzwerkparameterinformationen gemäß der Anwendungserkennungsanforderungsnachricht und Einleiten einer Angleichsanforderung mittels einer Richtliniensteuerungsfunktion, PCF, um den Ziel-EAS mittels einer voreingestellten Benutzereinrichtungsroutenauswahlrichtlinie, URSP, anzugleichen.

3. Verfahren nach Anspruch 1, wobei das Verfahren vor dem Senden der Anwendungserkennungsanforderungsnachricht an das 5G-RG mittels der voreingestellten ersten Schnittstelle ferner umfasst: Registrieren des 5G-RG in dem Kernnetzwerk.
oder wobei das Empfangen der Ziel-EAS-Informationen, die durch das Kernnetzwerk geantwortet werden, umfasst:
Empfangen der Ziel-EAS-Informationen, die durch das 5G-RG geantwortet werden, wobei die Ziel-EAS-Informationen durch das Kernnetzwerk an das 5G-RG gesendet werden.

4. Verfahren nach Anspruch 1, wobei das Verfahren vor dem Auslösen des Anwendungsanforderungsdienstes an den Proxy mittels des FN-RG ferner umfasst:
Registrieren des FN-RG in dem Kernnetzwerk mittels des Proxys;
oder wobei das Empfangen der Ziel-EAS-Informationen, die durch das Kernnetzwerk geantwortet werden, umfasst:
Empfangen der Ziel-EAS-Informationen, die durch die FN-RG geantwortet werden, wobei die Ziel-EAS-Informationen durch das Kernnetzwerk mittels des Proxys an das FN-RG gesendet werden.

5. Verfahren nach Anspruch 1, wobei die Netzwerkparameterinformationen mindestens eines der Folgenden umfassen: einen Domänennamen, DN, des Ziel-EAS, eine Edge-Datennetzwerkadresse, EDN-Adresse, des Ziel-EAS und Hilfsinformationen für eine Netzwerk-Slice-Auswahl, NSSAI, des EAC;
oder wobei die Ziel-EAS-Informationen mindestens eines der Folgenden umfassen: eine Internetprotokolladresse, IP-Adresse, des Ziel-EAS, Domänennameninformationen des Ziel-EAS und Identifikationsinformationen des Ziel-EAS.

6. Verfahren nach Anspruch 1, wobei das Verfahren ferner umfasst:
Senden einer Anwendungsdienstanforderungsnachricht an das Gateway, Auslösen eines EAS-Zugriffsdienstmechanismus mittels des Gateways, um die Anwendungsdienstanforderungsnachricht an eine EAS-Anwendungsfunktion, AF, des Kernnetzwerks weiterzuleiten, und dann Anfordern eines EAS-Dienstes von dem Kernnetzwerk, wobei die Anwendungsdienstanforderungsnachricht zum Anzeigen des EAS-Dienstes verwendet wird, der durch den EAC von dem Kernnetzwerk angefordert wird; und
Empfangen einer Anwendungsdienstanforderungsnachricht, die durch das Gateway geantwortet wird, wobei die Anwendungsdienstanforderungsantwortnachricht durch das Gateway gemäß einer Anwendungsdienstregistrierungsabschlussnachricht erzeugt wird, die durch das Kernnetzwerk gesendet wird, und die Anwendungsdienstregistrierungsabschlussnachricht zum Anweisen des Kernnetzwerks verwendet wird, um die Registrierung des EAS-Dienstes für den EAC abzuschließen.

7. Verfahren nach Anspruch 6, wobei die Anwendungsdienstanforderungsnachricht Anwendungsauthentifizierungsinformationen überträgt, wobei die Anwendungsauthentifizierungsinformationen zum Anweisen des EAS verwendet werden, eine Zugriffsauthentifizierung an dem EAC durchzuführen, und die Anwendungsauthentifizierungsinformationen mindestens eines der Folgenden umfassen: Domänennamensysteminformationen, DNS-Informationen, des Anwendungsdienstes und Identitätsdokumentinformationen, ID-Informationen, des EAC;
oder wobei das Senden der Anwendungsdienstanforderungsnachricht an das Gateway umfasst:
Senden der Anwendungsdienstanforderungsnachricht an das Gateway mittels einer dritten Schnittstelle, wobei die dritte Schnittstelle es unterstützt, Inhalt zu übertragen, der einer Vielzahl von Anwendungsdiensten entspricht;
oder wobei das Verfahren vor dem Senden der Anwendungsdienstanforderungsnachricht an das Gateway ferner umfasst:
Senden, durch das Gateway, einer Registrierungsauthentifizierungsanforderung an das Kernnetzwerk, wobei die Authentifizierungsregistrierungsanforderung zum Anweisen des Gateways verwendet wird, eine Registrierungsauthentifizierung an dem Kernnetzwerk durchzuführen;
Einleiten, durch das Gateway, einer Anforderung an eine PCF mittels einer Zugriffs- und Mobilitätsverwaltungsfunktion, AMF, sodass die PCF Richtlinieninformationen von dem Gateway über den EAS mittels Suchen nach einer voreingestellten URSP-Richtlinie erfasst, wobei die Richtlinieninformationen mindestens eines der Folgenden umfassen: eine IP-Adresse des EAS, Benutzerebenenfunktionsinformationen, UPF-Informationen, die dem EAS entsprechen; und
Herstellen, durch das Gateway und gemäß den Richtlinieninformationen, einer PDU-Sitzung zwischen dem Gateway und einer UPF, die durch die UPF-Informationen angezeigt wird, wobei die PDU-Sitzung zum Übertragen des Datenverkehrs von dem EAC zu dem EAS und/oder für einen Umleitungsablauf des Datenverkehrs verwendet wird.

8. Verfahren nach Anspruch 7, wobei die Registrierungsauthentifizierungsanforderung durch eine Einkapselung mit einer permanenten Teilnahmeberechtigungskennung, SUPI, oder eine Einkapselung mit einer verborgenen Teilnahmeberechtigungskennung, SUCI, basierend auf einem LINE-ID-Format erzeugt wird;
oder wobei die URSP-Richtlinie lokal konfiguriert wird oder die URSP-Richtlinie während des Prozesses des Gateways konfiguriert wird, das die Registrierungsauthentifizierungsanforderung an das Kernnetzwerk sendet;
oder wobei die Richtlinieninformationen durch die AMF weiter verwendet werden, um eine richtlinienbezogene Verbindung zwischen dem Edge-Anwendungsdienst des Gateways und der PCF herzustellen; und nachdem das Gateway, gemäß den Richtlinieninformationen, die PDU-Sitzung zwischen dem Gateway und der UPF hergestellt hat, die durch die UPF-Informationen angezeigt wird, das Verfahren ferner umfasst:
Ausführen eines Konfigurationsaktualisierungsmechanismus des Gateways mittels der PCF und Bereitstellen der URSP-Richtlinie für das Gateway mittels der PCF, um das Gateway anzuweisen, Zuordnungsinformationen und Benutzerstandortinformationen gemäß der URSP-Richtlinie zu registrieren; und/oder
Bereitstellen, mittels der PCF, von URSP-Routenrichtlinieninformationen, die durch die EAS AF angefordert werden, und Angleichen des Edge-Anwendungsverkehrs mittels der URSP-Routenrichtlinieninformationen, wobei die URSP-Routenrichtlinieninformationen mindestens eines der Folgenden umfassen: einen Datennetzwerknamen, DNN, und S-NSSAI; der Edge-Anwendungsverkehr zum Anzeigen des Verkehrs in einer Richtung von dem EAC zu dem EAS verwendet wird; und/oder
Bereitstellen eines Richtliniendienstes mittels der PCF, wobei der Richtliniendienst zum Binden einer UE an die AMF verwendet wird.

9. Verfahren nach Anspruch 1, wobei das Verfahren ferner umfasst:
Senden einer Anwendungsdienstanforderungsnachricht an das Gateway, Auslösen eines EAS-Zugriffsdienstmechanismus mittels des Gateways, um die Anwendungsdienstanforderungsnachricht an die EAS AF des Kernnetzwerks weiterzuleiten, und dann Anfordern eines EAS-Dienstes von dem Kernnetzwerk, wobei die Anwendungsdienstanforderungsnachricht zum Anzeigen des EAS-Dienstes verwendet wird, der durch den EAC von dem Kernnetzwerk angefordert wird; und
Empfangen einer Anwendungsdienstablehnungsnachricht, die durch das Gateway geantwortet wird, wobei die Anwendungsdienstablehnungsantwortnachricht durch das Gateway gemäß einer Anwendungsdienstregistrierungsablehnungnachricht erzeugt wird, die durch das Kernnetzwerk gesendet wird, und die Anwendungsdienstregistrierungsablehnungnachricht zum Anzeigen verwendet wird, dass das Kernnetzwerk den EAS-Dienst nicht erkennt, der für den EAC bereitgestellt wird.

10. Verfahren nach Anspruch 1, wobei das Verfahren ferner umfasst:
Senden einer Anwendungsdienstfreigabenachricht an das Gateway, Auslösen eines EAS-Zugriffsdienstmechanismus mittels des Gateways, um die Anwendungsdienstfreigabenachricht an die EAS AF des Kernnetzwerks weiterzuleiten, und dann Anfordern des Kernnetzwerks, einen EAS-Dienst freizugeben, wobei die Anwendungsdienstfreigabenachricht zum Anzeigen des EAS-Dienstes verwendet wird, der durch den EAC angefordert wird, um von dem Kernnetzwerk freigegeben zu werden; und
Empfangen einer Anwendungsdienstfreigabenachricht, die durch das Gateway geantwortet wird, wobei die Anwendungsdienstfreigabeantwortnachricht durch das Gateway gemäß einer Anwendungsdienstfreigabeabschlussnachricht erzeugt wird, die durch das Kernnetzwerk gesendet wird, und die Anwendungsdienstfreigabeabschlussnachricht zum Anzeigen verwendet wird, dass das Kernnetzwerk das Freigeben des EAS-Dienstes für den EAC abgeschlossen hat;
vorzugsweise wobei das Senden der Anwendungsdienstfreigabenachricht an das Gateway ferner umfasst:
Senden der Anwendungsdienstfreigabenachricht an das Gateway und Senden, durch das Gateway, der Anwendungsdienstfreigabenachricht an die EAS AF des Kernnetzwerks mittels einer Zugriffs-Gateway-Funktion, AGF, um die EAS AF anzuweisen, eine Anwendungsdienstfreigabeanforderung an das Kernnetzwerk gemäß der Anwendungsdienst-Freigabenachricht einzuleiten; und
wenn das Kernnetzwerk bestimmt, dass der EAS-Dienst die PDU-Ressourceninformationen monopolisiert, Einleiten, durch das Kernnetzwerk, einer Anwendungsdienstressourcenfreigabeanforderung, Benachrichtigen des Gateways mittels der AGF und Freigeben einer Benutzerebenenressource für das Gateway.

11. Verfahren nach Anspruch 1, ferner umfassend:
Senden einer Anwendungsdienstaktualisierungsnachricht an das Gateway, Auslösen eines EAS-Zugriffsdienstmechanismus mittels des Gateways, um die Anwendungsdienstaktualisierungsnachricht an die EAS AF des Kernnetzwerks weiterzuleiten, und dann Anfordern des Kernnetzwerks, einen EAS-Dienst zu aktualisieren, wobei die Anwendungsdienstaktualisierungsnachricht zum Anzeigen des EAS-Dienstes verwendet wird, der durch den EAC angefordert wird, um durch das Kernnetzwerk aktualisiert zu werden; und
Empfangen einer Anwendungsdienstaktualisierungsnachricht, die durch das Gateway geantwortet wird, wobei die Anwendungsdienstaktualisierungsantwortnachricht durch das Gateway gemäß einer Anwendungsdienstaktualisierungsabschlussnachricht erzeugt wird, die durch das Kernnetzwerk gesendet wird, und die Anwendungsdienstaktualisierungsabschlussnachricht zum Anzeigen verwendet wird, dass das Kernnetzwerk den EAS-Dienst aktualisiert hat;
vorzugsweise wobei das Senden der Anwendungsdienstaktualisierungsnachricht an das Gateway, das Auslösen des EAS-Zugriffsdienstaktualisierungsmechanismus mittels des Gateways, um die Anwendungsdienstaktualisierungsnachricht an die EAS AF des Kernnetzwerks weiterzuleiten, und dann das Anfordern des Kernnetzwerks, den EAS-Dienst zu aktualisieren, ferner umfasst:
Senden der Anwendungsdienstaktualisierungsnachricht an das Gateway, Auslösen des EAS-Zugriffsdienstaktualisierungsmechanismus mittels des Gateways, um die Anwendungsdienstaktualisierungsnachricht an die EAS AF des Kernnetzwerks weiterzuleiten, und dann Anweisen der EAS AF, gemäß der Anwendungsdienstaktualisierungsnachricht einen Anwendungsdienst eines Aktualisierungs-EAS für den EAC auszuwählen;
vorzugsweise wobei die EAS AF-Auswahl des Anwendungsdienstes des Aktualisierungs-EAS für den EAC gemäß der Anwendungsdienstaktualisierungsnachricht umfasst:
Anfordern, durch die EAS AF, von Aktualisierungs-EAS-Informationen von der PCF des Kernnetzwerks, wobei die Aktualisierungs-EAS-Informationen mindestens eine Kennung des Aktualisierungs-EAS umfassen und der Aktualisierungs-EAS ein EAS ist, das die Voraussetzungen erfüllt, die dem EAS-Dienst entsprechen, der durch die Anwendungsdienstaktualisierungsnachricht angezeigt wird;
Aufzeichnen, durch die EAS AF, der Entsprechung zwischen der Kennung des EAC und der Kennung des Aktualisierungs-EAS;
neues Auswählen, durch die EAS AF, der UPF gemäß den Aktualisierungs-EAS-Informationen, Anweisen des Gateways, eine PDU-Sitzung zwischen dem Gateway und der neu ausgewählten UPF herzustellen; und
Senden, durch die EAS AF, der Anwendungsdienstaktualisierungabschlussnachricht an das Gateway mittels der PDU-Sitzung, um das Gateway anzuweisen, die Anwendungsdienstaktualisierungsantwortnachricht gemäß den Anwendungsdienstaktualisierungabschlussnachricht zu erzeugen, um dem EAC zu antworten.

12. Einrichtung zum Erkennen von Edge-Anwendungen, die auf einen Edge-Anwendungs-Client, EAC, angewendet wird und umfasst:
ein erstes Sendemodul (102), das konfiguriert ist, um eine Anwendungserkennungsanforderungsnachricht an ein Kernnetzwerk zu senden, sodass das Kernnetzwerk einen Ziel-Edge-Anwendungsserver, EAS, gemäß Anwendungsinhaltsinformationen angleicht, die in der Anwendungserkennungsanforderungsnachricht übertragen werden, wobei die Anwendungsinhaltsinformationen mindestens Netzwerkparameterinformationen umfassen und die Netzwerkparameterinformationen zum Anweisen des EAC verwendet werden, die Informationen des entsprechenden EAS anzugleichen; und
ein erstes Empfangsmodul (104), das konfiguriert ist, um Ziel-EAS-Informationen zu empfangen, die durch das Kernnetzwerk geantwortet werden, wobei die Ziel-EAS-Informationen zum Anzeigen des Ziel-EAS verwendet werden;
wobei das erste Sendemodul (102) ferner konfiguriert ist zum:
Senden der Anwendungserkennungsanforderungsnachricht an ein Gateway, das ein 5G-RG ist, mittels einer voreingestellten ersten Schnittstelle und Auslösen des Anwendungserkennungsanforderungsdienstes an das Kernnetzwerk mittels des 5G-RG, um die Anwendungserkennungsanforderungsnachricht an das Kernnetzwerk zu senden; oder
Senden der Anwendungserkennungsanforderungsnachricht an ein Gateway, das ein FN-RG ist, mittels einer voreingestellten zweiten Schnittstelle und Auslösen des Anwendungsanforderungsdienstes an einen Proxy mittels des FN-RG, um die Anwendungserkennungsanforderungsnachricht mittels des Proxys an das Kernnetzwerk zu senden.

## Revendications

1. Procédé de découverte d'application de périphérie, appliqué à un client d'application de périphérie, EAC, et comprenant :
l'envoi (S102) d'un message de demande de découverte d'application à un réseau central, de sorte que le réseau central mette en correspondance un serveur d'application de périphérie cible, EAS, selon des informations sur le contenu d'application transportées dans le message de demande de découverte d'application, dans lequel les informations de contenu d'application comprennent au moins des informations de paramètres de réseau, et les informations de paramètres de réseau sont utilisées pour ordonner à l'EAC de faire correspondre les informations de l'EAS correspondant ; et
la réception (S104) d'informations d'EAS cible répondues par le réseau central, dans lequel les informations d'EAS cible sont utilisées pour indiquer l'EAS cible ;
dans lequel l'envoi du message de demande de découverte d'application au réseau central comprend :
l'envoi du message de demande de découverte d'application à une passerelle étant un 5G-RG au moyen d'une première interface prédéfinie, et le déclenchement du service de demande de découverte d'application au réseau central au moyen du 5G-RG, de manière à envoyer le message de demande de découverte d'application au réseau central ; ou
l'envoi du message de demande de découverte d'application à une passerelle étant un FN-RG au moyen d'une deuxième interface prédéfinie, et le déclenchement du service de demande d'application à un mandataire au moyen du FN-RG, de manière à envoyer le message de demande de découverte d'application au réseau central au moyen du mandataire.

2. Procédé selon la revendication 1, dans lequel la mise en correspondance de l'EAS cible selon les informations de contenu d'application transportées dans le message de demande de découverte d'application le réseau central comprend :
l'acquisition, par le réseau central, des informations de paramètres de réseau selon le message de demande de découverte d'application, et le lancement d'une demande de mise en correspondance au moyen d'une fonction de commande de politique, PCF, de manière à mettre en correspondance l'EAS cible au moyen d'une politique de sélection de route d'équipement d'utilisateur, URSP, prédéfinie.

3. Procédé selon la revendication 1, dans lequel, avant d'envoyer le message de demande de découverte d'application au 5G-RG au moyen de la première interface prédéfinie, le procédé comprend en outre :
l'enregistrement du 5G-RG auprès du réseau central.
ou, dans lequel la réception des informations d'EAS cible répondues par le réseau central comprend :
la réception des informations d'EAS cible répondues par le 5G-RG, dans lequel les informations d'EAS cible sont envoyées par le réseau central au 5G-RG.

4. Procédé selon la revendication 1, dans lequel, avant de déclencher le service de demande d'application au mandataire au moyen du FN-RG, le procédé comprend en outre :
l'enregistrement du FN-RG auprès du réseau central au moyen du mandataire ;
ou, dans lequel la réception des informations d'EAS cible répondues par le réseau central comprend :
la réception des informations d'EAS cible répondues par le FN-RG, dans lequel les informations d'EAS cible sont envoyées au FN-RG au moyen du mandataire.

5. Procédé selon la revendication 1, dans lequel les informations de paramètres de réseau comprennent au moins l'un des éléments suivants : un nom de domaine, DN, de l'EAS cible, une adresse de réseau de données de périphérie, EDN, de l'EAS cible et des informations d'aide à la sélection de tranche de réseau, NSSAI, de l'EAC ;
ou, dans lequel les informations d'EAS cible comprennent au moins l'un des éléments suivants : une adresse de protocole Internet, IP, de l'EAS cible, des informations de nom de domaine de l'EAS cible et des informations d'identification de l'EAS cible.

6. Procédé selon la revendication 1, dans lequel le procédé comprend en outre :
l'envoi d'un message de demande de service d'application à la passerelle, le déclenchement d'un mécanisme de service d'accès à l'EAS au moyen de la passerelle, de manière à transmettre le message de demande de service d'application à une fonction d'application, AF, d'EAS du réseau central, puis la demande d'un service d'EAS au réseau central, dans lequel le message de demande de service d'application est utilisé pour indiquer le service d'EAS demandé par l'EAC au réseau central ; et
la réception d'un message de réponse de demande de service d'application répondu par la passerelle, dans lequel le message de réponse de demande de service d'application est généré par la passerelle selon un message d'achèvement d'enregistrement de service d'application envoyé par le réseau central, et le message d'achèvement d'enregistrement de service d'application est utilisé pour ordonner au réseau central d'achever l'enregistrement du service d'EAS pour l'EAC.

7. Procédé selon la revendication 6, dans lequel le message de demande de service d'application transporte des informations d'authentification d'application, dans lequel les informations d'authentification d'application sont utilisées pour ordonner à l'EAS d'effectuer une authentification d'accès sur l'EAC, et les informations d'authentification d'application comprennent au moins l'un des éléments suivants : informations de système de noms de domaine, DNS, du service d'application, et informations de document d'identité, ID, de l'EAC ;
ou, dans lequel l'envoi du message de demande de service d'application à la passerelle comprend :
l'envoi du message de demande de service d'application à la passerelle au moyen d'une troisième interface, dans lequel la troisième interface prend en charge le transport du contenu correspondant à une pluralité de services d'application ;
ou, dans lequel, avant d'envoyer le message de demande de service d'application à la passerelle, le procédé comprend en outre :
l'envoi, par la passerelle, d'une demande d'authentification d'enregistrement au réseau central, dans lequel la demande d'authentification d'enregistrement est utilisée pour ordonner à la passerelle d'effectuer l'authentification d'enregistrement sur le réseau central ;
le lancement, par la passerelle, d'une demande à une PCF au moyen d'une fonction de gestion de l'accès et de la mobilité, AMF, de sorte que la PCF acquiert des informations de politique de la passerelle vers l'EAS au moyen de la recherche d'une politique URSP prédéfinie, dans lequel les informations de politique comprennent au moins l'un des éléments suivants : une adresse IP de l'EAS, des informations de fonction de plan utilisateur, UPF, correspondant à l'EAS ; et
l'établissement, par la passerelle et selon des informations de politique, d'une session PDU entre la passerelle et une UPF indiquée par les informations UPF, dans lequel la session PDU est utilisée pour transporter le trafic de l'EAC vers l'EAS et/ou une opération de réacheminement du trafic.

8. Procédé selon la revendication 7, dans lequel la demande d'authentification d'enregistrement est générée par l'encapsulation de l'identifiant permanent d'abonnement, SU PI, ou l'encapsulation de l'identifiant caché d'abonnement, SUCI, en fonction d'un format LINE-ID ;
ou, dans lequel la politique URSP est configurée localement, ou la politique URSP est configurée au cours du processus d'envoi par la passerelle de la demande d'authentification d'enregistrement au réseau central ;
ou, dans lequel les informations de politique sont également utilisées par l'AMF pour établir un lien relatif à la politique entre le service d'application de périphérie de la passerelle et la PCF ; et après que la passerelle a établi, selon les informations de politique, la session PDU entre la passerelle et l'UPF indiquée par les informations UPF, le procédé comprend en outre :
l'exécution d'un mécanisme de mise à jour de configuration de la passerelle au moyen de la PCF, et la fourniture de la politique URSP pour la passerelle au moyen de la PCF, de manière à ordonner à la passerelle d'enregistrer des informations d'association et des informations de localisation d'utilisateur selon la politique URSP ; et/ou,
la fourniture, au moyen de la PCF, d'informations de politique d'acheminement URSP demandées par l'AF d'EAS, et la mise en correspondance du trafic d'application de périphérie au moyen des informations de politique d'acheminement URSP, dans lequel les informations de politique d'acheminement URSP comprenant au moins l'un des éléments suivants : un nom de réseau de données, DNN, et S-NSSAI ; le trafic d'application de périphérie est utilisé pour indiquer le trafic dans une direction allant de l'EAC à l'EAS ; et/ou,
la fourniture d'un service de politique au moyen de la PCF, dans lequel le service de politique est utilisé pour lier un UE à l'AMF.

9. Procédé selon la revendication 1, dans lequel le procédé comprend en outre :
l'envoi d'un message de demande de service d'application à la passerelle, le déclenchement d'un mécanisme de service d'accès à l'EAS au moyen de la passerelle, de manière à transmettre le message de demande de service d'application à l'AF d'EAS du réseau central, puis la demande d'un service d'EAS au réseau central, dans lequel le message de demande de service d'application est utilisé pour indiquer le service d'EAS demandé par l'EAC au réseau central ; et
la réception d'un message de rejet de demande de service d'application répondu par la passerelle, dans lequel le message de rejet de demande de service d'application est généré par la passerelle selon un message de rejet d'enregistrement de service d'application envoyé par le réseau central, et le message de rejet d'enregistrement de service d'application est utilisé pour indiquer que le réseau central ne découvre pas le service EAS fourni pour l'EAC.

10. Procédé selon la revendication 1, dans lequel le procédé comprend en outre :
l'envoi d'un message de libération de service d'application à la passerelle, le déclenchement d'un mécanisme de libération de service d'accès à l'EAS au moyen de la passerelle, de manière à transmettre le message de libération de service d'application à l'AF d'EAS du réseau central, puis la demande au réseau central de libérer un service d'EAS, dans lequel le message de libération de service d'application est utilisé pour indiquer le service d'EAS dont la libération par le réseau central est demandée par l'EAC ; et
la réception d'un message de réponse de libération de service d'application répondu par la passerelle, dans lequel le message de réponse de libération de service d'application est généré par la passerelle selon un message d'achèvement de libération de service d'application envoyé par le réseau central, et le message d'achèvement de libération de service d'application est utilisé pour indiquer que le réseau central a achevé la libération du service d'EAS pour l'EAC ;
de préférence, dans lequel l'envoi du message de libération de service d'application à la passerelle comprend en outre :
l'envoi du message de libération de service d'application à la passerelle, et l'envoi, par la passerelle, du message de libération de service d'application à l'AF d'EAS du réseau central au moyen d'une fonction de passerelle d'accès, AGF, de manière à ordonner à l'AF d'EAS de lancer une demande de libération de service d'application au réseau central selon le message de libération de service d'application ; et
lorsque le réseau central détermine que le service d'EAS monopolise des informations de ressources PDU, le lancement, par le réseau central, d'une demande de libération des ressources de service d'application, la notification de la passerelle au moyen de l'AGF et la libération d'une ressource de plan utilisateur pour la passerelle.

11. Procédé selon la revendication 1, comprenant en outre :
l'envoi d'un message de mise à jour de service d'application à la passerelle, le déclenchement d'un mécanisme de mise à jour de service d'accès à l'EAS au moyen de la passerelle, de manière à transmettre le message de mise à jour de service d'application à l'AF d'EAS du réseau central, puis la demande au réseau central de mettre à jour un service d'EAS, dans lequel le message de mise à jour de service d'application est utilisé pour indiquer le service d'EAS dont la mise à jour par le réseau central est demandée par l'EAC ; et
la réception d'un message de réponse de mise à jour de service d'application répondu par la passerelle, dans lequel le message de réponse de mise à jour de service d'application est généré par la passerelle selon un message d'achèvement de mise à jour de service d'application envoyé par le réseau central, et le message d'achèvement de mise à jour de service d'application est utilisé pour indiquer que le réseau central a mis à jour le service d'EAS ;
de préférence, dans lequel l'envoi du message de mise à jour de service d'application à la passerelle, le déclenchement du mécanisme de mise à jour de service d'accès à l'EAS au moyen de la passerelle, de manière à transmettre le message de mise à jour de service d'application à l'AF d'EAS du réseau central, puis la demande au réseau central de mettre à jour le service d'EAS, comprennent en outre :
l'envoi du message de mise à jour de service d'application à la passerelle, le déclenchement du mécanisme de mise à jour de service d'accès à l'EAS au moyen de la passerelle, de manière à transmettre le message de mise à jour de service d'application à l'AF d'EAS du réseau central, puis le fait d'ordonner à l'AF d'EAS de sélectionner un service d'application d'un EAS de mise à jour pour l'EAC selon le message de mise à jour du service d'application ;
de préférence, dans lequel l'AF d'EAS sélectionnant le service d'application de l'EAS de mise à jour pour l'EAC selon le message de mise à jour de service d'application comprend :
la demande, par l'AF d'EAS, d'informations d'EAS de mise à jour à la PCF du réseau central, dans lequel les informations d'EAS de mise à jour comprennent au moins un identifiant de l'EAS de mise à jour, et l'EAS de mise à jour est un EAS qui satisfait aux exigences correspondant au service d'EAS indiqué par le message de mise à jour de service d'application ;
l'enregistrement, par l'AF d'EAS, de la correspondance entre l'identifiant de l'EAC et l'identifiant de l'EAS de mise à jour ;
la re-sélection, par l'AF d'EAS, de l'UPF selon les informations d'EAS de mise à jour, le fait d'ordonner à la passerelle d'établir une session PDU entre la passerelle et l'UPF re-sélectionnée ; et
l'envoi, par l'AF d'EAS, du message d'achèvement de mise à jour de service d'application à la passerelle au moyen de la session PDU, afin d'ordonner à la passerelle de générer le message de réponse de mise à jour de service d'application selon le message d'achèvement de mise à jour de service d'application pour répondre à l'EAC.

12. Appareil de découverte d'application de périphérie, appliqué à un client d'application de périphérie, EAC, et comprenant :
un premier module d'envoi (102), configuré pour envoyer un message de demande de découverte d'application à un réseau central, de sorte que le réseau central mette en correspondance un serveur d'application de périphérie, EAS, cible selon des informations de contenu d'application transportées dans le message de demande de découverte d'application, dans lequel les informations de contenu d'application comprennent au moins des informations de paramètres de réseau, et les informations de paramètres de réseau sont utilisées pour ordonner à l'EAC de mettre en correspondance les informations de l'EAS correspondant ; et
un premier module de réception (104), configuré pour recevoir des informations d'EAS cible répondues par le réseau central, dans lequel les informations d'EAS cible sont utilisées pour indiquer l'EAS cible ;
dans lequel le premier module d'envoi (102) est en outre configuré pour :
envoyer le message de demande de découverte d'application à une passerelle étant un 5G-RG au moyen d'une première interface prédéfinie, et déclencher le service de demande de découverte d'application au réseau central au moyen du 5G-RG, de manière à envoyer le message de demande de découverte d'application au réseau central ; ou
envoyer le message de demande de découverte d'application à une passerelle étant un FN-RG au moyen d'une deuxième interface prédéfinie, et déclencher le service de demande d'application à un mandataire au moyen du FN-RG, de manière à envoyer le message de demande de découverte d'application au réseau central au moyen du mandataire.
